# EUROPÄISCHE PATENTSCHRIFT

(11) **EP 3 151 474 B1**
(45) Veröffentlichungstag und Bekanntmachung des Hinweises auf die Patenterteilung: **05.09.2018**
(21) Anmeldenummer: 16191502.0
(22) Anmeldetag: 29.09.2016
(51) Int. Cl.: H04L 12/403

(54) **VERFAHREN ZUR DATENKOMMUNIKATION MIT REDUZIERTEM OVERHEAD IN EINEM ECHTZEITFÄHIGEN ETHERNET-DATENNETZWERK**
METHOD FOR DATA COMMUNICATION WITH REDUCED OVERHEAD IN A REAL-TIME ETHERNET DATA NETWORK
PROCÉDÉ DE COMMUNICATION DE DONNÉES AVEC SURDÉBIT RÉDUIT DANS UN RÉSEAU DE DONNÉES ETHERNET EN TEMPS RÉEL

(30) Priorität: 01.10.2015 AT 508342015
(43) Veröffentlichungstag der Anmeldung: 05.04.2017
(73) Patentinhaber: B&R Industrial Automation GmbH, 5142 Eggelsberg (AT)
(72) Erfinder: Bruckner, Dietmar, 5102 Anthering (AT)
(74) Vertreter: Patentanwälte Pinter & Weiss OG

(56) Entgegenhaltungen:
- EP-A1- 2 410 697
- DE-A1-102013 225 882
- US-A1- 2011 153 889
- US-A1- 2012 140 861

## Beschreibung

Die gegenständliche Erfindung betrifft ein Verfahren zur Datenkommunikation in einem echtzeitfähigen Ethernet-Datennetzwerk, in dem ein Master über das Ethernet-Datennetzwerk mit einer Anzahl von Slaves verbunden wird und zwischen dem Master und den Slaves Daten in Form von Datenpaketen versendet werden.

In einem Datennetzwerk zur Datenkommunikation ist ein Netzwerkprotokoll implementiert, mit dem Daten in Datenpaketen auf dem Datennetzwerk zwischen den mit dem Datennetzwerk verbundenen Netzwerkknoten übertragen werden. Das heute wohl bekannteste und am weitesten verbreitete Netzwerkprotokoll ist das Ethernet-Protokoll. Ethernet definiert hierzu Datenpakete (auch Datenframe oder Ethernetframe genannt), in denen Daten eines übergeordneten Kommunikationsprotokolls in einem Ethernet-Datenpaket gekapselt übertragen werden können. Hierbei können in einem Ethernet-Datenpaket Daten des Kommunikationsprotokolls mit einer Datenlänge zwischen 46 und 1500 Byte übertragen werden. Die Adressierung im Ethernet-Protokoll erfolgt über die MAC (Media Access Control) Adressen der Netzwerkknoten, die für jedes Netzwerkgerät eindeutig vergeben ist. Ethernet ist aus Sicht des bekannten OSI-Schichtmodells ausschließlich auf den Schichten 1 und 2 implementiert. In den höheren Schichten können verschiedene Kommunikationsprotokolle implementiert sein. Hierbei hat sich eine Vielzahl von Kommunikationsprotokollen etabliert, wie beispielsweise IP auf Schicht 3 oder TCP und UDP auf Schicht 4, um einige weit verbreitete Kommunikationsprotokolle zu nennen.

Hardwaremäßig sind heutige Ethernetsysteme sogenannte geschaltete Datennetzwerke, in denen einzelne Netzwerkknoten nicht direkt miteinander verbunden sein müssen und nicht direkt miteinander kommunizieren können müssen, sondern über Kopplungselemente, sogenannte Netzwerkswitches oder Netzwerkhubs, verbunden sein können. Ein Kopplungselement hat hierzu eine Anzahl von Netzwerkports, an die ein Netzwerkteilnehmer (entweder ein Netzwerknoten oder ein anderes Kopplungselement) angeschlossen werden kann. Ein solches Kopplungselement leitet ein Ethernet-Datenpaket entweder an alle Ports (Hub) oder an (einen) bestimmte(n) Port(s) (Switch) weiter. Damit werden in einem geschalteten Datennetzwerk sogenannte Punkt-zu-Punkt Verbindungen hergestellt, bei denen Ethernet-Datenpakete von einem Netzwerkknoten über eine Anzahl von Kopplungselementen an einen anderen Netzwerkknoten weitergeleitet werden.

Netzwerkknoten, die in der industriellen Automatisierung eingesetzt werden, haben oftmals intern einen 3-Port-Switch verbaut, wobei zwei Ports von außen zugänglich sind und der dritte Port zur internen Verschaltung dient. Damit lassen sich ohne zusätzliche externe Kopplungselemente Linientopologien realisieren, in denen ein Netzwerkknoten mit dem jeweils nächsten Netzwerkknoten in Form einer Linie verbunden ist, was im industriellen Umfeld hilft, den Verkabelungsaufwand zu reduzieren. Selbstverständlich können aber auch externe Netzwerkswitches oder externe Netzwerkhubs zum Aufbau der Netzwerktopologie eingesetzt werden. Grundsätzlich ist jede Netzwerktopologie möglich, also insbesondere eine Sterntopologie, eine Linientopologie, eine Baumtopologie, eine Ringtopologie, usw. und auch beliebige Kombination daraus. Bei einer Ringtopologie sind bekanntermaßen in der Regel spezielle Vorkehrungen zu treffen, um das unkontrollierte Zirkulieren von Datenpaketen mit Mehrfachadresse zu verhindern.

Um Ethernet auch zur industriellen Automatisierung einsetzen zu können, wurden bereits echtzeitfähige Ethernet-Protokolle entwickelt, da das Standard Ethernet-Netzwerkprotokoll bekanntermaßen nicht echtzeitfähig ist. Beispiele bekannter echtzeitfähiger Ethernet-Netzwerkprotokolle sind Modbus/TCP, Ethernet/IP, ProfiNET IRT, EtherCAT oder Ethernet POWERLINK, um nur einige zu nennen. In diesem Zusammenhang spricht man auch oftmals von Industrial Ethernet. Mit diesen echtzeitfähigen Ethernet-Protokollen soll eine für die jeweilige Anwendung ausreichend schnelle und deterministische Datenkommunikation sichergestellt werden. Es soll damit also insbesondere sichergestellt werden, dass ein echtzeitrelevantes Datenpaket innerhalb einer vorgegebenen Zeitspanne von einem sendenden Netzwerkknoten über das Netzwerk zu einem empfangenden Netzwerkknoten übertragen wird. In einer industriellen Automatisierungsumgebung bedeutet Echtzeitfähigkeit z.B., dass zwischen der Erfassung eines Messwertes, Weiterleitung des Messwertes an eine Regelungseinheit, Berechnung eines Stellwertes in der Regelungseinheit aufgrund des Messwertes und Übertragen des Stellwertes an einen Aktuator zur Durchführung einer Handlung eine fest vorgegebene Zeitspanne einzuhalten ist. Bezogen auf das echtzeitfähige Ethernet-Datennetzwerk zur Übertragung dieser Daten über das echtzeitfähige Ethernet-Datennetzwerk muss dabei die Datenübertragung innerhalb einer vorgegebenen Zeitspanne sichergestellt sein.

In einer industriellen Automatisierungsumgebung gibt es meist zumindest einen Master-Netzwerkknoten (in Folge auch kurz Master), der mit zumindest einem zugeordneten, in der Regel mehreren zugeordneten, Slave-Netzwerkknoten (in Folge auch kurz Slaves) kommuniziert. Zur Realisierung eines echtzeitfähigen Ethernet-Datennetzwerkes haben die bekannten echtzeitfähigen Ethernet-Netzwerkprotokolle einen Sendezyklus mit einer vorgebbaren Zykluszeit definiert, innerhalb der der Master mit jedem Slave kommunizieren kann. Das umfasst normalerweise zyklisch die Möglichkeit eines Datenpakets vom Master an jeden Slave und umgekehrt auch zumindest ein Datenpaket eines Slaves, normalerweise zumindest ein Datenpaket von jedem Slave, an den zugeordneten Master. Die erreichbare und vorab ermittelbare minimale Zykluszeit ergibt sich aus der Summe der maximalen Laufzeiten der Datenpakete. Die Laufzeiten hardwareabhängig und ergeben sich aus den Bitübertragungszeiten (Länge, Payload) der Datenpakete, aus der Netzwerkinfrastruktur (z.B. Verzögerungszeiten durch Kopplungselemente) und der Netzwerktopologie. Dabei sind ebenfalls noch die oben genannten Grenzen in der Größe der Ethernet-Datenpakete zu beachten.

Die US 2011/153889 A1 offenbart ein Verfahren zum Betreiben eines echtzeitfähigen Ethernet-Bussystems mit einem Master und mehreren Slaves. Die Slaves bilden einen Ring, wobei jeder Slave Daten in ein Datenpaket schreibt und an den benachbarten Slave sendet, wobei der letzte Slave das Datenpaket an den Master überträgt.

Dieser zyklische (isochrone) Datenverkehr, der die Basis der Echtzeitfähigkeit im echtzeitfähigen Ethernet-Netzwerkprotokoll darstellt, wird in der Regel in jedem Sendezyklus durch asynchrone (nicht zyklische) Datenpakete erweitert. Solche asynchronen Datenpakete werden von der nicht den Echtzeitanforderungen unterworfenen Datenkommunikation genutzt, beispielsweise zur Konfiguration der Slaves, zu Visualisierungszwecken oder für Statusabfragen. Für solche asynchronen Datenpakete wird Bandbreite reserviert, d.h., dass in jedem Sendezyklus eine gewisse, definierte Zeit für asynchronen Datenverkehr zur Verfügung steht. In der konkreten Umsetzung des zyklischen und asynchronen Datenverkehrs unterscheiden sich die bekannten echtzeitfähigen Ethernet-Protokolle.

Echtzeitfähige Ethernet-Datennetzwerke werden immer größer, im Sinne immer mehr Netzwerkknoten, die in das Datennetzwerk eingebunden werden. Die im Datennetzwerk verfügbare Bandbreite für die Datenkommunikation muss daher gut geplant werden, um die erreichbaren Übertagungszeiten für Echtzeitanwendungen niedrig zu halten.

Die Bandbreite wird aber auch durch viele sehr kurze Datenpakete belastet. Das kleinste Ethernet Datenpaket enthält 46 Byte Daten. Sind die zu versendenden Nutzdaten kürzer, so müssen die Datenpakete aufgefüllt werden, in der Regel mit Nullen (das sogenannte Frame Padding mit Paddingdaten). In einem echtzeitfähigen Ethernet-Datennetzwerk senden die Slaves (z.B. Sensoren, Ein-/Ausgabegeräte, Geber, usw.) aber oftmals nur wenige Daten (im Sinne von geringer Datenlänge) an den Master (z.B. eine Steuereinheit), womit durch diese kurzen Datenpakete viel Bandbreite am Datennetzwerk verschwendet wird.

Um die verfügbare Bandbreite besser ausnutzen zu können, wurden schon sogenannte Summenrahmen verwenden, in denen Daten für oder von mehreren Netzwerkknoten enthalten sind. Auf diese Weise kann Overhead, und gegebenenfalls Paddingdaten, vieler kleiner Datenpakete eingespart werden, womit die Bandbreite besser ausgenutzt und die Zykluszeit verkürzt werden kann. EtherCAT nutzt beispielsweise ein Summenrahmenverfahren, bei dem der Master ein Datenpaket mit Daten für alle Slaves an den ersten Slave schickt. Dieser liest seine Daten aus dem Datenpaket (Outdaten) aus und überschreibt diese Daten mit Daten, die der Slave an den Master (Inputdaten) senden möchte. Dieses geänderte Datenpaket wird dann an den zweiten Slave gesendet, usw., bis das Datenpaket vom letzten Slave in umgekehrter Reihenfolge wieder an den Master gesendet wird. Der Nachteil daran ist, dass die reservierten Daten im Summenrahmen pro Slave immer so groß sein müssen wie das Maximum aus Input- und Outputdaten jedes Slaves, was die verfügbare Bandbreite reduziert. Weiters braucht EtherCAT eigene Bausteine (ASICs) in den Netzwerkknoten, da dieses Verfahren mit Standard Ethernet Hardware nicht funktioniert. In einer anderen bekannten Implementierung des Summenrahmenverfahrens wird das Datenpaket von Master in Richtung der Slaves verkürzt, indem jeder Slave seine Daten aus dem Datenpaket entnimmt und in umgekehrter Richtung verlängert, indem jeder Slave seine Daten an das Datenpaket an den Master hinzufügt. Ein Nachteil eines solchen Summenrahmenverfahrens ist, dass das Datenpaket an jeder Stelle im Datennetzwerk unterschiedlich lang ist und damit das Datennetzwerk schwer zu diagnostizieren ist. Abgesehen davon müssen auch hier zur Realisierung eigene Bausteine in den Netzwerkknoten eingesetzt werden. Ein solches Summenrahmenverfahren wird von ProfiNET IRT unterstützt (Dynamic Frame Packing). POWERLINK versendet ein Datenpaket vom Master als Summenrahmen an alle Slaves und der Master bekommt von jedem Slave ein separates Ethernet-Datenpaket retour. Dieses Verfahren kann mit Standard Ethernet-Hardware realisiert werden, weil der Summenrahmen einmal im Master erzeugt wird und danach von keinen anderen Netzwerknoten mehr verändert wird. Die bekannten Verfahren basieren aber alle darauf, dass der Master die Datenkommunikation anstößt.

Mit diesen Verfahren konnte schon eine Verbesserung der Ausnutzung der verfügbaren Bandbreite am echtzeitfähigen Ethernet-Datennetzwerk erzielt werden. D.h. es konnte erreicht werden, dass mehr Daten pro Zeiteinheit versendet werden können, bzw. dass die Zykluszeiten der Sendezyklen verkürzt werden konnte.

Es ist daher eine Aufgabe der gegenständlichen Erfindung, ein Verfahren anzugeben, mit dem die Zykluszeit der Sendezyklen in einem echtzeitfähigen Ethernet Datennetzwerk verkürzt werden kann.

Diese Aufgabe wird erfindungsgemäß dadurch gelöst, dass eine Mehrzahl von Slaves zu einer Summenrahmengruppe zusammengefasst werden und einer dieser Slaves als Initiator-Slave der Summenrahmengruppe dient und ein Summenrahmen-Datenpaket an die anderen Slaves der Summenrahmengruppe sendet, womit diese anderen Slaves der Summenrahmengruppe das Summenrahmen-Datenpaket der Reihe nach empfangen, jeder dieser Slaves seine Daten in das Summenrahmen-Datenpaket schreibt und der letzte Slave der Reihe das Summenrahmen-Datenpaket an den Master sendet. Durch das Summenrahmen-Datenpaket, das Daten mehrerer Slaves enthält, können Overhead Daten eingespart werden, womit weniger Daten über das Datennetzwerk zu senden sind und damit auch die benötigte Zykluszeit reduziert werden kann.

Wenn für die Summenrahmengruppe eine erste Mehrfachadresse vergeben wird, über die alle Slaves der Summenrahmengruppe adressierbar sind und der Initiator-Slave der Summenrahmengruppe ein Summenrahmen-Datenpaket an die erste Mehrfachadresse sendet, kann das erfindungsgemäße Summenrahmenverfahren auf einfache Weise implementiert werden.

In einer bevorzugten Ausgestaltung enthält die erste Mehrfachadresse den Master. Damit kann der Konfigurationsaufwand verringert werden. Diese Ausgestaltung ist insbesondere vorteilhaft, wenn der Initiator-Slave das Summenrahmen-Datenpaket in Richtung des Masters sendet, wenn der Initiator-Slave also weiter vom Master entfernt ist, als die anderen Slaves der Summenrahmengruppe.

Ganz besonders vorteilhaft ist es, wenn der letzte Slave der Reihe das Summenrahmen-Datenpaket an zumindest einen weiteren Slave der Summenrahmengruppe, vorzugsweise an alle anderen Slaves der Summenrahmengruppe, sendet. Auf diese Weise kann auch direkter Querverkehr zwischen zwei Slaves realisiert werden, womit die zwei Slaves ohne Zutun des Masters, was ansonsten notwendig wäre, Daten miteinander austauschen können.

In einer bevorzugten Ausgestaltung ist für die Summenrahmengruppe eine zweite Mehrfachadresse vergeben, wobei die zweite Mehrfachadresse den Master und zumindest einen Slave der Summenrahmengruppe umfasst und der letzte Slave der Reihe das Summenrahmen-Datenpaket an die zweite Mehrfachadresse versendet. Diese Ausgestaltung ist insbesondere vorteilhaft, wenn der Initiator-Slave der Slave der Summenrahmengruppe ist, der dem Master an nächsten ist. Dazu kann vorteilhafterweise vorgesehen sein, dass in der zweiten Mehrfachadresse, neben dem Master, alle Slaves der Summenrahmengruppe oder alle Slaves der Summenrahmengruppe, die über direkten Querverkehr Daten miteinander austauschen, enthalten sind. Auf diese Weise kann auf einfache Weise auch direkter Querverkehr zwischen zwei Slaves realisiert werden.

Wenn jeder Slave der Summenrahmengruppe zu seinen Daten Slave-Redundanzdaten hinzufügt, hat der Master die Möglichkeit, die Daten der Slaves der Summenrahmengruppe jeweils auf mögliche Fehler zu untersuchen.

Die gegenständliche Erfindung wird nachfolgend unter Bezugnahme auf die Figuren 1 bis 6 näher erläutert, die beispielhaft, schematisch und nicht einschränkend vorteilhafte Ausgestaltungen der Erfindung zeigen. Dabei zeigt
Fig.1 und 2 die Kommunikation auf einem echtzeitfähigen Ethernet-Datennetzwerk,
Fig.3 und 4 eine erste Umsetzung des erfindungsgemäßen Summenrahmenverfahrens und
Fig.5 und 6 eine zweite Umsetzung des erfindungsgemäßen Summenrahmenverfahrens.

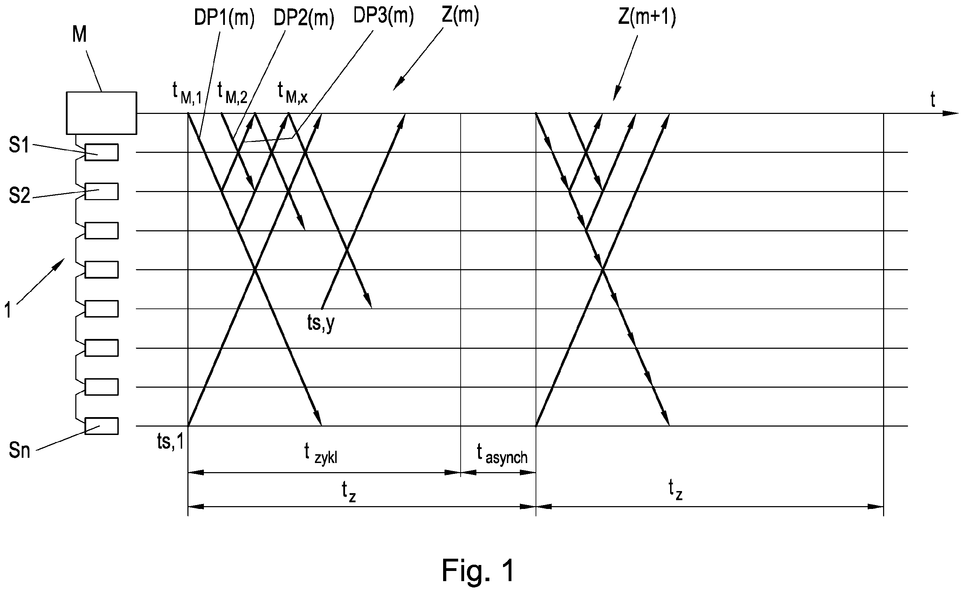

Ein mögliches, der Erfindung zugrunde liegendes, echtzeitfähiges Ethernet-Netzwerkprotokoll wird anhand der Fig.1 erläutert, wobei natürlich auch andere echtzeitfähige Ethernet-Netzwerkprotokolle verwendet werden könnten. Zur Beschreibung wird eine beispielhafte Netzwerktopologie in Form einer Linientopologie herangezogen, in der Netzwerkknoten, hier ein Master M mit einer Reihe von in Serie geschalteten Slaves S1 ... Sn, zu einem Netzwerk verbunden sind. Die Slaves S1 ... Sn sind hier als Netzwerkgeräte mit integriertem 3-Port Switch (Kopplungselement) ausgeführt, was eine solche Linientopologie ohne externe Kopplungselemente ermöglicht. Der Master M kann in jedem Sendezyklus Z, mit vorgegebener Zykluszeit t_{Z}, mit jedem Slave S1 ... Sn kommunizieren, indem am Ethernet-Datennetzwerk 1 Ethernet-Datenpakete DP (in weitere Folge einfach auch als Datenpakete DP bezeichnet) versendet werden. Ein versandtes Datenpaket DP ist in Fig.1 als Pfeil angedeutet, wobei die Pfeilspitze die Senderichtung (also von Master M zu einem Slave S oder umgekehrt) angibt. Jede waagrechte Linie ist einem Netzwerkknoten (Master M oder Slaves S1 ... Sn) zugeordnet und stellt einen Zeitstrahl dar. Die netzwerkbedingte Latenz beim Übertragen der Datenpakete DP über das Ethernet-Datennetzwerk 1 wird durch die schrägen Pfeile angedeutet, wobei die Verarbeitungsdauer der Datenpakete DP in den Kopplungselementen und die Latenz durch die endliche Ausbreitungsgeschwindigkeit im Medium (Kupferkabel, Lichtwellenleiter) zusammengefasst und vereinfacht als konstant angenommen werden.

Ein Sendezyklus Z(m) ist zeitlich genau eingeteilt, indem die Zeitpunkte t_{M,1}, t_{M,2}, ..., t_{M,x}, t_{S,1}, ..., t_{S,y} festgelegt sind, zu denen jeder Netzwerkknoten, der Master M oder die Slaves S1 ... Sn, Datenpakete DP versenden darf. Damit können durch die Planung der Zeitpunkte Datenkollisionen am Ethernet-Datennetzwerk 1 vermieden werden. Nachdem Ethernet eine Vollduplex-Datenkommunikation erlaubt, können aber auf einem Netzwerkabschnitt gleichzeitig Datenpakte DP in beiden Richtungen unterwegs sein. Damit weiß jeder der beteiligten Netzwerkknoten (Master M, Slaves S), zu welcher Zeit innerhalb eines Sendezyklus Z er Datenpakete DP versenden darf, und wann er welche empfangen soll.

Diese Zeitpunkte t_{M,1}, t_{M,2}, ..., t_{M,x}, t_{S,1}, ..., t_{S,y} innerhalb des Sendezyklus Z können vorab sehr genau geplant werden, wenn bekannt ist, wie viele Daten (Byte) in jedem Datenpakte DP übertragen werden. Je größer das zu erwartende Datenpaket DP ist, umso weiter auseinander sind die Zeitunkte t_{M,1}, t_{M,2}, ..., t_{M,x}, t_{S,1}, ..., t_{S,y}. Ist die Datengröße vorab nicht bekannt, dann kann von einer maximalen Datengröße, z.B. der maximalen Framegröße eines Ethernetframes, ausgegangen werden. Zwischen zwei Datenpaketen DP ist am Datennetzwerk 1 auch jeweils eine vorgegebene Pause einzuhalten.

Die Anzahl der Netzwerkknoten, Master M und Slaves S1 ... Sn, und die Größe der versendeten Daten ist damit auch mitbestimmend für die erzielbare Zykluszeit t_{Z}.

In Fig.1 sendet der Master M im Sendezyklus Z(m) zum Zeitpunkt t_{M,1} ein Datenpaket DP1(m) an den letzten Slave Sn. Dieses Datenpaket DP1(m) könnte aber auch ein Summenrahmen sein, der Daten für alle Slaves S1 ... Sn enthält (angedeutet im Sendzyklus Z(m+1)) und von dem die Slaves S1 ... Sn ihre Daten lesen. Zu einem festgelegten Zeitpunkt t_{M,2} danach sendet der Master M das nächste Datenpaket DP2(m), hier z.B. an den Slave S2. Zum selben Zeitpunkt kann der Slave S2 auch ein Datenpaket DP3(m) an den Master M senden. Dieses Prinzip wird auch von den restlichen Netzwerkknoten eingehalten, wobei nicht jeder Slave S1 ... Sn ein Datenpaket DP erhalten oder senden muss. Die Kommunikation ist durch die Vorgabe der Zeitpunkte t_{M,1}, t_{M,2}, ..., t_{M,x}, t_{S,1}, ..., t_{S,y} aber vorteilhaft so geplant, dass die Datenpakete DP von den Slaves S1 ... Sn am Master M hintereinander und ohne zeitliche Lücke (abgesehen von einer einzuhaltenden Pause) eintreffen. Dieser Kommunikationsablauf wiederholt sich dann in den nachfolgenden Sendezyklen Z(m+i), wobei nicht in jedem Sendezyklus Z auch immer die gleichen Netzwerkknoten Datenpakte DP senden oder empfangen müssen, wie in Fig.1 angedeutet.

Diese geplante Datenkommunikation findet zyklisch statt und es ist in jedem Sendezyklus Z ein zeitlicher Abschnitt t_{zykl} für diesen isochronen Datenverkehr vorgesehen. In jedem Sendezyklus Z ist aber auch ein Abschnitt t_{asynch} für asynchronen Datenverkehr reserviert, in dem Ethernet-Datenkommunikation stattfindet, die keine harten Echtzeitanforderungen erfüllen muss.

Wenn sich die zyklische Kommunikation von Sendezyklus zu Sendezyklus unterscheidet (wie in Fig. 1 zwischen Z(m) und Z(m+1) beispielhaft angedeutet), dann gibt es zumindest eine maximale Periodendauer (a Sendezyklen), innerhalb derer sich die Sendemuster exakt wiederholen, d. h. die zyklischen Datenpakete in Z(m) sind gleich denen in Z(m+a). In jedem einzelnen Sendezyklus Z kann sich aber das Verhältnis zwischen t_{zykl} und t_{asynch} ändern, je nach Anzahl der geplanten zyklischen Datenpakete.

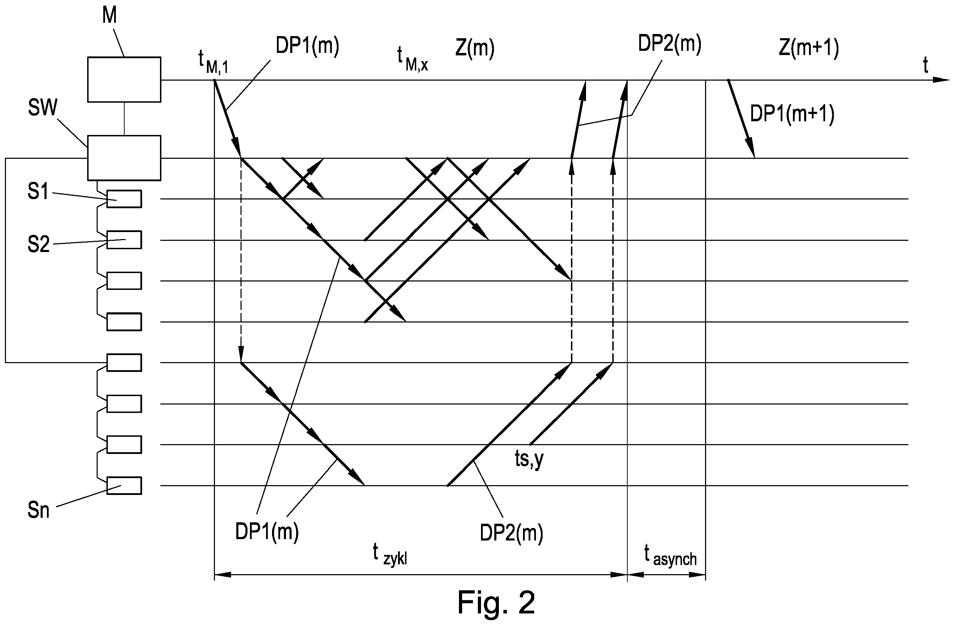

Dieses Kommunikationsprinzip gilt natürlich auch in anderen Netzwerktopologien, wie anhand von Fig.2 am Beispiel einer Sterntopologie beschrieben wird. Hier ist mittels eines externen Netzwerkswitches SW eine Sterntopologie aufgebaut, wobei in jedem Zweig eine Linientopologie, wie in der Fig.1 beschrieben, realisiert ist. Der Master M ist ebenfalls mit dem Netzwerkswitch SW verbunden. Im gezeigten Beispiel wird zum Zeitpunkt t_{M,1} zu Beginn jedes Sendezyklus Z ein Datenpaket DP1(m) in Form eines Summenrahmens an alle Slaves S1 ... Sn gesendet. Dieses Datenpaket DP1(m) wird vom Netzwerkswitch SW in die beiden Zweige weitergeleitet und dort an alle Slaves S1 ... Sn gesendet. Die anderen Datenpakete DP werden dann wieder zu den dafür vorgesehenen Zeitpunkten t_{M,x}, t_{S,y} innerhalb des Sendezyklus Z(m) versendet. Hier ist allerdings zu bedenken, dass die Datenpakete DP, die von den Slaves S1 ... Sn an den Master M zurückgesendet werden, vorzugsweise so zu planen sind, dass im Master M und im dazwischenliegenden Netzwerkswitch SW keine Datenstaus entstehen können. Der Zeitpunkt des Datenpaketes DP2(m) vom Slave Sn an den Master M ist z.B. so geplant, dass dieses Datenpaket DP2(m) nicht mit anderen Datenpaketen aus dem anderen Zweig der Sterntopologie kollidiert, wie in Fig.2 dargestellt. Die zwischen Master M und Netzwerkswitch SW hin- und hergehenden Datenpakete DP sind zwecks Übersichtlichkeit in Fig.2 nur teilweise dargestellt.

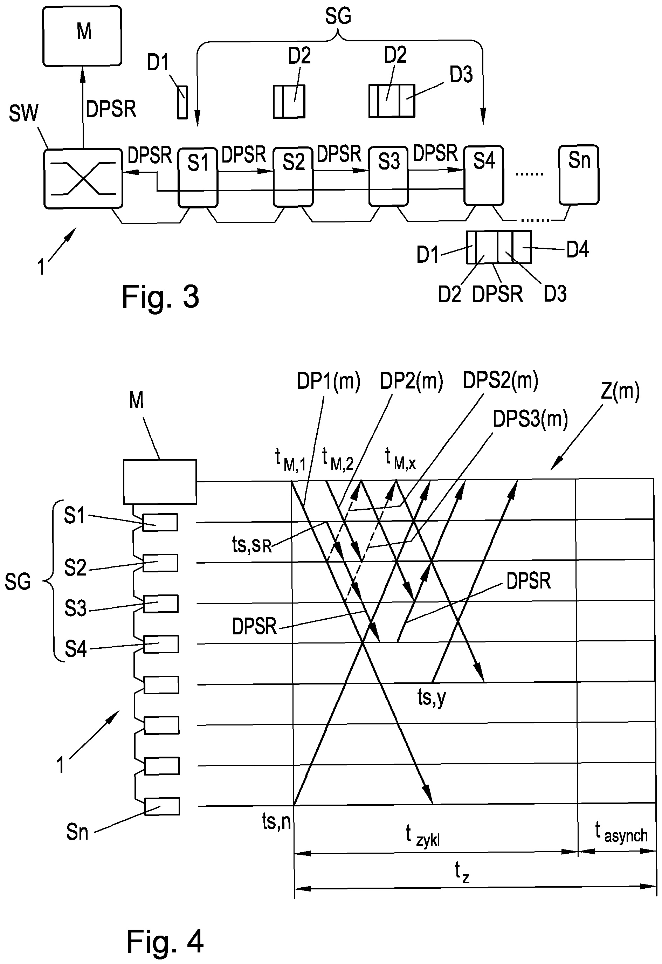

Das erfindungsgemäße Verfahren zur Datenkommunikation in einem echtzeitfähigen Ethernet-Datennetzwerk wird nun anhand der Fig.3 erläutert. Das echtzeitfähige Ethernet-Datennetzwerk 1 besteht hier aus einem Master M Netzwerkknoten, einem Netzwerkswitch SW und einer Anzahl von Slave S1, ..., Sn Netzwerkknoten. Eine Anzahl von Slaves, im gezeigten Ausführungsbeispiel die Slaves S1, S2, S3, S4, sind zu einer Summenrahmengruppe SG zusammengefasst.

Ein Summenrahmen-Datenpaket DPSR wird von einem Initiator-Slave, in diesem Fall der Slave S1, angestoßen und an alle anderen Slaves S2, S3, S4 der Summenrahmengruppe SG gesendet. Diese Slaves S2, S3, S4 müssen daher konfiguriert sein, beim Eintreffen eines Summenrahmen-Datenpakets DPSR dieses an einen nächsten Slave der Summenrahmengruppe SG weiterzuleiten. Das kann auf unterschiedliche Weise erfolgen.

Nachdem in einem Ethernet Datenpaket bekanntermaßen die Zieladresse des Datenpakets enthalten ist, können die Slaves S1, S2, S3, S4 so konfiguriert sein, dass ein Slave S1, S2, S3, S4 die im Summenrahmen-Datenpaket DPSR enthaltene Zieladresse ändert, bevor das Summenrahmen-Datenpaket DPSR weitergeleitet wird. Die Slaves S1, S2, S3, S4 müssen dazu ein Summenrahmen-Datenpaket DPSR erkennen und müssen den jeweils nächsten Slave S1, S2, S3, S4 der Summenrahmengruppe SG kennen (was in den Adresstabellen der Slaves S1, S2, S3, S4 konfiguriert sein kann).

Ebenso ist es möglich, dass die Slaves S1, S2, S3, S4 der Summenrahmengruppe SG logisch über eine erste Mehrfachadresse miteinander verbunden sind. Eine Mehrfachadresse ist eine Netzwerkadresse, mit der gleichzeitig mehrere Netzwerkknoten adressiert werden. Wird ein Datenpaket an eine solche Mehrfachadresse gesendet, so betrachtet jeder Netzwerkknoten, der dieser Mehrfachadresse zugeordnet ist, das Datenpaket als ein für diesen Netzwerkknoten bestimmtes Datenpaket. Jeder Slave S1, S2, S3, S4 der Summenrahmengruppe SG muss in seiner Adresstabelle entsprechend konfiguriert sein. In den Slaves S1, S2, S3, S4 muss damit auch die Information hinterlegt sein, dass die Slaves S1, S2, S3, S4 zur Summenrahmengruppe SG gehören. Jeder Slave S1, S2, S3, S4 der Summenrahmengruppe SG versendet das Summenrahmen-Datenpaket DPSR an diese erste Mehrfachadresse.

Das Summenrahmen-Datenpaket DPSR wird dabei der Reihe nach von einem Slave der Summenrahmengruppe SG zum nächsten gesendet. Jeder der Slaves S1, S2, S3, S4 der Summenrahmengruppe SG fügt dabei seine Daten D1, D2, D3, D4 in das Summenrahmen-Datenpaket DPSR ein.

Die Slaves S1, S2, S3, S4 der Summenrahmengruppe SG sind wie beschrieben entsprechend konfiguriert, vorzugsweise in den zugehörigen Adresstabellen. Jeder Slave S1, S2, S3, S4 der Summenrahmengruppe SG weiß daher, an welchen anderen Slave der Summenrahmengruppe SG das Summenrahmen-Datenpaket DPSR weiterzusenden ist.

Dabei kann vorgesehen sein, dass der Initiator-Slave S1 ein Summenrahmen-Datenpaket DPSR der benötigten Größe versendet und jeder Slave seine Daten D1, D2, D3, D4 an der vorgesehenen Stelle im Summenrahmen-Datenpaket DPSR einfügt. Alternativ kann auch jeder der Slaves S1, S2, S3, S4 seine Daten D1, D2, D3, D4 im Summenrahmen-Datenpaket DPSR anhängen, womit das Summenrahmen-Datenpaket DPSR immer länger wird. Der letzte Slave S4 der Reihe der Slaves S1, S2, S3, S4 in der Summenrahmengruppe SG schickt dann das Summenrahmen-Datenpaket DPSR an den Master M. Es kann auch vorgesehen sein, dass der letzte Slave S4 der Reihe das Summenrahmen-Datenpaket DPSR auch an andere Slaves der Summenrahmengruppe SG sendet, vorzugsweise an alle Slaves der Summenrahmengruppe SG, die direkten Querverkehr benötigen (siehe weiter unten).

Das Versenden des Summenrahmen-Datenpaket DPSR an den Master M kann wiederum, und analog zu oben, auf verschiedene Weise implementiert sein. Der letzte Slave S4 der Reihe kann den Master M direkt adressieren. Dieser Slave S4 kann aber auch einen anderen Slave S1, S2, S3 der Summenrahmengruppe SG adressieren, die das Summenrahmen-Datenpaket DPSR damit ebenfalls erhalten und dann das Summenrahmen-Datenpaket DPSR wiederum an andere Slaves der Summenrahmengruppe SG oder an den Master M weiterleiten können. Es ist aber auch möglich, für das Senden des Summenrahmen-Datenpakets DPSR an den Master M eine zweite Mehrfachadresse zu konfigurieren, die den Master M und zumindest einen Slave S1, S2, S3, S4 der Summenrahmengruppe SG umfasst. Wird das Summenrahmen-Datenpaket DPSR am Weg zum Master M über zumindest einen Slave S1, S2, S3, S4 der Summenrahmengruppe SG geführt, dann lässt sich auf einfache Weise direkter Querverkehr zwischen Slaves S1, S2, S3, S4 der Summenrahmengruppe SG realisieren.

Es kann vorgesehen sein, dass nur eine einzige Mehrfachadresse konfiguriert ist, die auch den Master M enthält und sowohl der Initiator-Slave, als auch der letzte Slave der Summenrahmengruppe SG an diese Mehrfachadresse sendet.

Die bekannten Overhead Daten eines Ethernet Datenpakets wie dem Summenrahmen-Datenpaket DPSR, und die gegebenenfalls notwendigen Paddingdaten, sind in Fig.3 der Einfachheit nicht dargestellt. Die Overhead Daten, und gegebenenfalls Daten durch Frame Padding, eines Ethernet Datenpakets sind aber viel weniger, als die Overhead Daten vieler einzelner Datenpakete von den Slaves S1, S2, S3, S4 an den Master M. Da nunmehr nur einmal die Overhead Daten für das Summenrahmen-Datenpaket DPSR versendet werden müssen, kann auch die Zykluszeit t_{z} der Sendezyklen reduziert werden, da in Summe weniger Daten in Richtung Master M versendet werden.

Im Ausführungsbeispiel nach Fig.3 ist der Initiator-Slave S1 am Datennetzwerk 1 näher am Master M angeordnet, als der letzte Slave S4 der Slaves S1, S2, S3, S4 der Summenrahmengruppe SG. Damit wird das Summenrahmen-Datenpaket DPSR zuerst in die Richtung vom Master M weg gesendet. Der letzte Slave S4 sendet das Summenrahmen-Datenpaket DPSR dann in Richtung zum Master M zurück, womit das Summenrahmen-Datenpaket DPSR nochmals durch alle an der Summenrahmengruppe SG beteiligten Slaves S1, S2, S3, S4 vorbeikommt. Das hat den Vorteil, dass auf diese Weise gleichzeitig direkter Querverkehr zwischen zwei Slaves S1, S2, S3, S4 der Summenrahmengruppe realisiert werden kann. D.h., dass auf diese Weise zwei (oder auch mehr) Slaves S1, S2, S3, S4 direkt Daten miteinander austauschen können.

Wenn nur eine Mehrfachadresse für beide Senderichtungen des Summenrahmen-Datenpakets DPSR verwendet wird, dann würde der Initiator-Slave S1 in Fig.3, der näher am Master angeordnet ist, als andere Slaves S2, S3, S4 der Summenrahmengruppe SG, damit beim erstmaligen Versenden das Summenrahmen-Datenpaket DPSR nicht nur an die anderen Slaves S2, S3, S4 der Summenrahmengruppe SG senden, sondern auch direkt an den Master M. Der Master M kann nun so konfiguriert sein, dass er ein solches Summenrahmen-Datenpaket DPSR, das ja noch keine Daten der Slaves S2, S3, S4 enthält, ignoriert. Der Master M kann dazu anhand des Inhalts des Summenrahmen-Datenpaket DPSR erkennen, ob es sich um ein zu ignorierendes Summenrahmen-Datenpaket DPSR handelt oder nicht. Der Master M kann dazu den Inhalt der Daten der Slaves S2, S3, S4 untersuchen (die vom Slave S1 mit einem bestimmten Muster gefüllt werden könnten) oder es könnte auch ein Flag im Summenrahmen-Datenpaket DPSR enthalten sein, der das anzeigt. Alternativ kann der Initiator-Slave S1 an eine erste Mehrfachadresse, die den Master M nicht enthält, senden. Der letzte Slave S4 der Reihe kann dann an eine zweite Mehrfachadresse senden, die auch den Master M enthält. Diese zweite Mehrfachadresse wird dann vom letzten Slave S4 vor dem Versenden in das Summenrahmen-Datenpaket DPSR eingefügt. Auf diese Weise wird das fertig gebaute Summenrahmen-Datenpaket DPSR vom letzten Slave S4 in Richtung zum Master M gesendet. Damit müssen in den Slaves S1, S2, S3, S4 der Summenrahmengruppe SG, zumindest die mit direktem Querverkehr, neben der ersten Mehrfachadresse auch die zweite Mehrfachadresse konfiguriert sein. Ist kein Querverkehr vorgesehen, kann der letzte Slave S4 der Reihe den Master M im Summenrahmen-Datenpaket DPSR auch direkt adressieren.

In Fig.4 ist der Datenpaketverkehr zu diesem Ausführungsbeispiel nochmals dargestellt (der Einfachheit halber ohne Netzwerkswitch SW). Wie bereits beschrieben ist der Datenverkehr auf dem echtzeitfähigen Ethernet-Datennetzwerk 1 zeitlich genau geplant. Damit muss ein Summenrahmen-Datenpaket DPSR einer Summenrahmengruppe ebenfalls zeitlich genau geplant werden und neben dem herkömmlichen Datenverkehr durchgeführt werden. Zum Zeitpunkt t_{S,SR} eines Sendezyklus Z(m) ist vorgesehen, dass der Initiator-Slave S1 ein Summenrahmen-Datenpaket DPSR an die konfigurierte Mehrfachadresse sendet. Dieses Summenrahmen-Datenpaket DPSR wird vorzugsweise so früh wie möglich im Sendezyklus t_{Z} versendet, wie in Fig.4 dargestellt, um Bandbreite zu sparen. Alle anderen Slaves S1, S2, S3, S4 der Summenrahmengruppe SG senden das Summenrahmen-Datenpaket DPSR ebenfalls zu festgelegten Zeitpunkten weiter.

Der letzte Slave S4 der Reihe sendet dann das Summenrahmen-Datenpaket DPSR an den Master M, entweder direkt oder, wie im gezeigten Ausführungsbeispiel über zumindest einen anderen Slave S2 der Summenrahmengruppe SG. Damit kann zwischen den Slaves S2, S4 direkter Querverkehr implementiert werden.

Die direkte Datenkommunikation eines Slaves S2, S3 der Summenrahmengruppe SG an den Master M über eine direkte Adressierung kann mit dem Summenrahmen-Datenpaket DPSR auch überflüssig werden. Die Datenpakete DPS2 und DPS3 der Slaves S2, S3 könnten damit eingespart werden, wie in Fig.4 strichliert angedeutet.

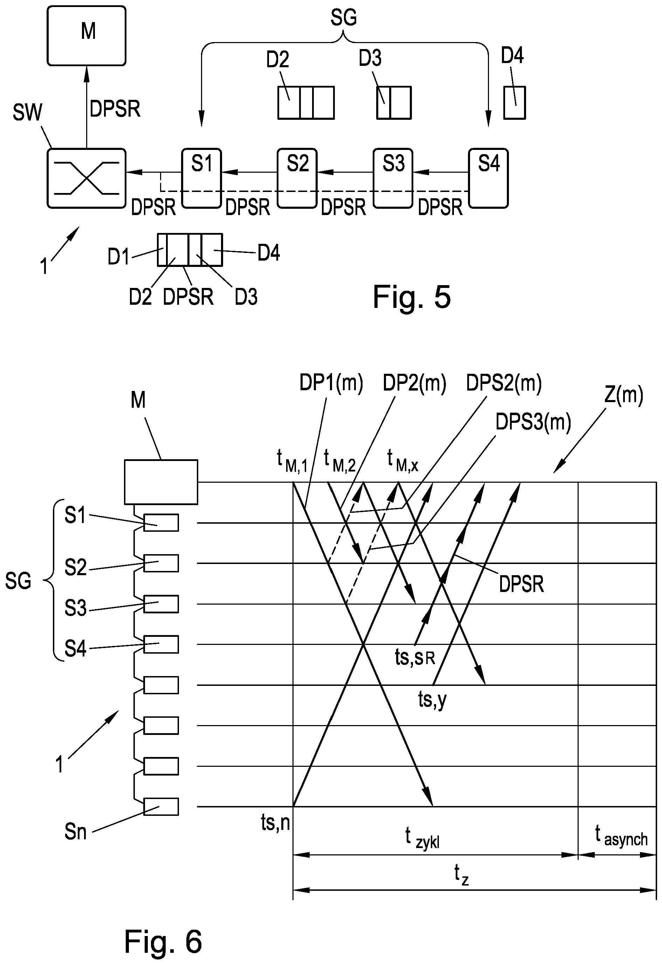

Mit Fig.5 ist eine weitere Möglichkeit des Versendens eines Summenrahmen-Datenpakets DPSR gemäß der Erfindung gezeigt. Hier ist der Initiator-Slave der Slave S4, also der am Datennetzwerk 1 vom Master M am weitesten entfernte Slave der Slaves S1, S2, S3, S4 der Summenrahmengruppe SG. Der Initiator-Slave S4 sendet wieder zum vorgesehenen Zeitpunkt t_{S,SR} eines Sendezyklus Z(m) (Fig.6) ein Summenrahmen-Datenpaket DPSR (wieder mit der benötigten Länge für alle Daten D1, ..., D4, oder alternativ nur mit seinen Daten D4) an die konfigurierte Mehrfachadresse. Die Mehrfachadresse umfasst hier den Master M und alle anderen Slaves S1, S2, S3 der Summenrahmengruppe SG. Damit wird das Summenrahmen-Datenpaket DPSR wieder durch alle Slaves S1, S2, S3, S4 der Summenrahmengruppe SG durchgereicht und letztendlich vom letzten Slave S1 der Summenrahmengruppe an den Master M gesendet. Jeder Slave S1, S2, S3, S4 fügt seine Daten in das Summenrahmen-Datenpaket DPSR ein. In diesem Fall reicht das Konfigurieren einer ersten Mehrfachadresse, die den Master M und alle Slaves S1, S2, S3, S4 der Summenrahmengruppe SG enthält, aus. Bei dieser Ausgestaltung ist allerdings kein direkter Querverkehr zwischen zwei Slaves der Summenrahmengruppe SG möglich.

Nachdem das Summenrahmen-Datenpaket DPSR von Slave zu Slave der Summenrahmengruppe SG durchgereicht wird und jeder Slave seine Daten hinzufügt, ist es vorteilhaft, wenn jeder Slave der Summenrahmengruppe SG seine Daten durch eigene Slave-Redundanzdaten (beispielsweise ein Cyclic Redundancy Code CRC) absichert. Diese Slave Redundanzdaten sind dabei zusätzlich zu den Ethernet-Redundanzdaten des Ethernet Datenpakets in den Ethernet Overhead Daten. Ohne diese Slave Redundanzdaten könnte es passieren, dass fehlerhafte Daten durch Überschreiben der Ethernet-Redundanzdaten in einem Slave für die nachfolgenden Slaves und den Master M als fehlerfrei markiert werden. Nachdem jeder Slave die Ethernet-Redundanzdaten neu berechnet und in das Ethernet-Datenpaket einfügt, könnte man nur anhand der Ethernet-Redundanzdaten solche Fehler nicht erkennen. Der Master M kann dann die Daten der Slaves S1, S2, S3, S4 anhand deren Slave-Redundanzdaten auf Fehler prüfen. Zusätzlich könnte noch vorgesehen sein, dass ein Slave, der einen Fehler in den Daten erkennt auch noch ein entsprechendes Flag im Summenrahmen-Datenpaket DPSR setzt. Der Master M, oder ein an direktem Querverkehr zwischen zwei Slaves beteiligter Slave der Summenrahmengruppe SG, kann dann bei gesetztem Flag entscheiden, ob er das ganze Summenrahmen-Datenpaket DPSR als fehlerhaft verwirft, oder ob er die einzelnen Slave-Redundanzdaten untersucht.

Es ist anzumerken, dass die Slaves S1, S2, S3, S4 einer Summenrahmengruppe SG am Datennetzwerk 1 nicht unmittelbar hintereinander angeordnet sein müssen, wie in den gezeigten Ausführungsbeispielen. Ebenso ist es nicht notwendig, dass die Summenrahmen-Datenpaket DPSR innerhalb der Summenrahmengruppe SG gemäß der Anordnung im echtzeitfähigen Ethernet-Datennetzwerk gesendet werden, wie in den gezeigten Ausführungsbeispielen, obwohl das durchaus zu bevorzugen ist. Grundsätzlich kann das Summenrahmen-Datenpaket DPSR in beliebiger Reihenfolge der Slaves S1, S2, S3, S4 der Summenrahmengruppe SG versendet werden. Es ist allerdings natürlich erstrebenswert, dass das Summenrahmen-Datenpaket DPSR so wenig wie möglich und über so kurze Strecken wir möglich im Datennetzwerk 1 unterwegs ist.

## Patentansprüche

1. Verfahren zur Datenkommunikation in einem echtzeitfähigen Ethernet-Datennetzwerk (1), in dem ein Master (M) über das Ethernet-Datennetzwerk (1) mit einer Anzahl von Slaves (S1, ..., Sn) verbunden wird und zwischen dem Master (M) und den Slaves (S1, ..., Sn) Daten in Form von Datenpaketen (DP) versendet werden, **dadurch gekennzeichnet, dass** eine Mehrzahl von Slaves (S1, S2, S3, S4) zu einer Summenrahmengruppe (SG) zusammengefasst werden und einer dieser Slaves (S1, S4) als Initiator-Slave der Summenrahmengruppe (SG) dient und ein Summenrahmen-Datenpaket (DPSR) an die anderen Slaves (S1, S2, S3, S4) der Summenrahmengruppe (SG) sendet, womit diese anderen Slaves (S1, S2, S3, S4) der Summenrahmengruppe (SG) das Summenrahmen-Datenpaket (DPSR) der Reihe nach empfangen, jeder dieser Slaves (S1, S2, S3, S4) seine Daten (D1, D2, D3, D4) in das Summenrahmen-Datenpaket (DPSR) schreibt und der letzte Slave (S4, S1) der Reihe das Summenrahmen-Datenpaket (DPSR) an den Master (M) sendet.

2. Verfahren nach Anspruch 1, **dadurch gekennzeichnet, dass** für die Summenrahmengruppe (SG) eine Mehrfachadresse vergeben wird, über die alle Slaves (S1, S2, S3, S4) der Summenrahmengruppe (SG) adressiert werden und der Initiator-Slave (S1, S4) der Summenrahmengruppe (SG) das Summenrahmen-Datenpaket (DPSR) an die erste Mehrfachadresse sendet.

3. Verfahren nach Anspruch 2, **dadurch gekennzeichnet, dass** die Mehrfachadresse den Master (M) umfasst.

4. Verfahren nach Anspruch 1, **dadurch gekennzeichnet, dass** der letzte Slave (S4, S1) der Reihe das Summenrahmen-Datenpaket (DPSR) an zumindest einen weiteren Slave (S1, S2, S3, S4) der Summenrahmengruppe (SG), vorzugsweise an alle anderen Slaves (S1, S2, S3, S4) der Summenrahmengruppe (SG), sendet.

5. Verfahren nach Anspruch 1, **dadurch gekennzeichnet, dass** für die Summenrahmengruppe (SG) eine Mehrfachadresse vergeben wird, wobei die Mehrfachadresse den Master (M) und zumindest einen Slave (S1, S2, S3, S4) der Summenrahmengruppe (SG) umfasst und der letzte Slave (S4, S1) der Reihe das Summenrahmen-Datenpaket (DPSR) an die Mehrfachadresse versendet.

6. Verfahren nach Anspruch 4, **dadurch gekennzeichnet, dass** die Mehrfachadresse alle Slaves (S1, S2, S3, S4) der Summenrahmengruppe (SG) umfasst, die über direkten Querverkehr Daten (D1, D2, D3, D4) miteinander austauschen.

7. Verfahren nach einem der Ansprüche 1 bis 6, **dadurch gekennzeichnet, dass** jeder Slave (S1, S2, S3, S4) der Summenrahmengruppe (SG) zu seinen Daten (D1, D2, D3, D4) Slave-Redundanzdaten hinzufügt.

## Claims

1. A method for data communication in a real-time capable Ethernet data network (1), in which a master (M) is connected by means of the Ethernet data network (1) to a plurality of slaves (S1, ..., Sn) and data in the form of data packets (DP) are transmitted between the master (M) and the slaves (S1, ..., Sn), **characterized in that** a plurality of slaves (S1, S1, S2, S3, S4) is combined into a sum frame group (SG) and one of these slaves (S1, S4) serves as initiator slave of the sum frame group (SG) and transmits a sum frame data packet (DPSR) to the other slaves (S1, S2, S3, S4) of the sum frame group (SG), so that these other slaves (S1, S2, S3, S4) of the sum frame group (SG) receive the sum frame data packet (DPSR) in sequence, each of these slaves (S1, S2, S3, S4) writes its data (D1, D2, D3, D4) into the sum frame data packet (DPSR) and the last slave of the sequence transmits the sum frame data packet (DPSR) to the master (M).

2. The method according to claim 1, **characterized in that** for the sum frame group (SG) a multiple address is assigned by means of which all slaves (S1, S2, S3, S4) of the sum frame group (SG) are addressed, and the initiator slave (S1, S4) of the sum frame group (SG) transmits the sum frame data packet (DPSR) to the first multiple address.

3. The method according to claim 2, **characterized in that** the multiple address comprises the master (M).

4. The method according to claim 1, **characterized in that** the last slave (S4, S1) of the sequence transmits the sum frame data packet (DPSR) to at least one further slave (S1, S2, S3, S4) of the sum frame group (SG), preferably to all other slaves (S1, S2, S3, S4) of the sum frame group (SG).

5. The method according to claim 1, **characterized in that** a multiple address is assigned or the sum frame group (SG), wherein the multiple address comprises the master (M) and at least one slave (S1, S2, S3, S4) of the sum frame group (SG) and the last slave (S4, S1) of the sequence transmits the sum frame data packet (DPSR) to the multiple address.

6. The method according to claim 4, **characterized in that** the multiple address comprises all slaves (S1, S2, S3, S4) of the sum frame group (SG) which exchange data (D1, D2, D3, D4) with one another by means of direct cross traffic data.

7. The method according to one of claims 1 to 6, **characterized in that** each slave (S1, S2, S3, S4) of the sum frame group (SG) adds slave redundancy data to its data (D1, D2, D3, D4).

## Revendications

1. Procédé de communication de données dans un réseau de données Ethernet (1) en temps réel, dans lequel un maître (M) est relié à un certain nombre d'esclaves (S1, ..., Sn) par le biais du réseau de données Ethernet (1) et des données sont envoyées sous la forme de paquets de données (DP) entre le maître (M) et les esclaves (S1, ..., Sn), **caractérisé en ce qu'**une pluralité d'esclaves (S1, S2, S3, S4) sont rassemblés pour former un groupe de trames de somme (SG) et l'un de ces esclaves (S1, S4) sert d'esclave initiateur du groupe de trames de somme (SG) et envoie un paquet de données de trames de somme (DPSR) aux autres esclaves (S1, S2, S3, S4) du groupe de trames de somme (SG) de sorte que ces autres esclaves (S1, S2, S3, S4) du groupe de trames de somme (SG) reçoivent le paquet de données de trames de somme (DPSR) dans l'ordre, chacun de ces esclaves (S1, S2, S3, S4) écrit ses données (D1, D2, D3, D4) dans le paquet de données de trames de somme (DPSR) et le dernier esclave (S4, S1) de la rangée envoie le paquet de données de trames de somme (DPSR) au maître (M).

2. Procédé selon la revendication 1, **caractérisé en ce qu'**une adresse de multidiffusion est attribuée au groupe de trames de somme (SG), laquelle adresse concerne tous les esclaves (S1, S2, S3, S4) du groupe de trames de somme (SG) et l'esclave d'initiateur (S1, S4) du groupe de trame de somme (SG) envoie le paquet de données de trames de somme (DPSR) à la première adresse de multidiffusion.

3. Procédé selon la revendication 2, **caractérisé en ce que** l'adresse de multidiffusion inclut le maître (M).

4. Procédé selon la revendication 1, **caractérisé en ce que** le dernier esclave (S4, S1) de la rangée envoie le paquet de données de trames de somme (DPSR) à au moins un autre esclave (S1, S2, S3, S4) du groupe de trames de somme (SG), de préférence à tous les autres esclaves (S1, S2, 53, S4) du groupe de trame de somme (SG).

5. Procédé selon la revendication 1, **caractérisé en ce qu'**une adresse de multidiffusion est attribuée au groupe de trames de somme (SG), l'adresse de multidiffusion incluant le maître (M) et au moins un esclave (S1, S2, S3, S4) du groupe de trames de somme (SG) et le dernier esclave (S4, S1) de la rangée envoie le paquet de données de trames de somme (DPSR) à l'adresse de multidiffusion.

6. Procédé selon la revendication 4, **caractérisé en ce que** l'adresse de multidiffusion inclut tous les esclaves (S1 S2, S3, S4) du groupe de trames de somme (SG) qui échange entre eux des données (D1, D2, D3, D4) par le biais d'un trafic transversal direct.

7. Procédé selon l'une des revendications 1 à 6, **caractérisé en ce que** chaque esclave (S1, S2, S3, S4) du groupe de trames de somme (SG) ajoute à ses données (D1, D2, D3, D4) des données redondantes d'esclave.
